# EUROPEAN PATENT SPECIFICATION

(11) **EP 0 741 817 B1**
(45) Date of publication and mention of the grant of the patent: **21.10.1998**
(21) Application number: 95907667.0
(22) Date of filing: 03.02.1995
(51) Int. Cl.: D21D 5/06, D21C 9/06

(54) **METHOD AND APPARATUS FOR TREATING RECYCLED PULP**
VERFAHREN UND VORRICHTUNG ZUR BEHANDLUNG VON WIEDERVERWENDETER PAPIERPULPE
PROCEDE ET APPAREIL DE TRAITEMENT DE PATE DE CELLULOSE RECYCLEE

(30) Priority: 04.02.1994 FI 940513
(43) Date of publication of application: 13.11.1996
(73) Proprietor: Ahlstrom Machinery Oy, 00440 Helsinki (FI)
(72) Inventor: KOHONEN, Raimo, FIN-57230 Savonlinna (FI); PELKIÖ, Ari, FIN-57710 Savonlinna (FI); SALORANTA, Olli, FIN-48600 Karhula (FI)
(74) Representative: Görg, Klaus, Dipl.-Ing.
(86) International application number: FI9500048
(87) International publication number: WO9521292

(56) References cited:
- WO-A-90/06396
- WO-A-91/15629
- WO-A-92/02676

## Description

### Technical Field

The present invention relates to a method described in the preamble of the appended patent claim 1 and to an apparatus described in the preamble of the appended patent claim 14. The method and the apparatus according to the invention are particularly well applicable in removal of ash and other fine impurities such as for example ink, stickies and other corresponding substances from recycled fiber pulp.

### Background Art

A number of methods and apparatus used for this purpose are know from the prior art. For example, German patent no. 30 24 246 relates to an apparatus and a method according to which recycled pulp suspension is taken at a consistency of 2 - 8 % into a cylinder having a wire surface. While the cylinder revolves the suspension attains a rotating movement and remains thereby relatively homogenous. Two filtrate vats have been provided outside the cylinder and the dirtier filtrate is collected to the vat at the inlet end of the cylinder and the clearer filtrate to the vat at the outlet end of the cylinder. During the whole treatment washing liquid is supplied to the suspension; the liquid used for this purpose is at the outlet end of the cylinder fresh water and at the inlet end of the cylinder the clear filtrate obtained the way described above.

Also the use of ordinary gravity drum filters for removing ash has been suggested. In these apparatus, the recycled pulp suspension is supplied to a vat provided with a revolving perforated cylinder having, for example, a wire surface. Inside the cylinder there are means for removing filtrate. Further, the surface of the cylinder is provided with ribs for agitating the pulp in the vat. The apparatus works so that while the inside of the cylinder is virtually empty hydrostatic pressure causes filtrate containing ash and fibers to be filtered inside the cylinder from the suspension in the vat. At the same time a pulp web is formed onto the cylinder which, depending on the thickness of the web, either detaches by itself while the web rises up from the vat as the cylinder revolves or is detached for example by means of a water jet so that the washed pulp drops to a pulp discharge chute.

Both the methods described above remove ash-containing filtrate from recycled pulp but there are two problems involved in these methods.

Firstly, if efficient ash removal is desired a screen surface, or wire surface, with relatively large apertures must be used because the web formed on the screen surface during the filtering process efficiently prevents ash from being removed with the filtrate, in other words the web tends to withhold not only fibers but also small particles of impurities. However, when the apertures are large also a large portion of valuable fiber material is removed with the filtrate.

Secondly, if on the other hand it is desired to ensure that no fibers are lost when using prior art equipment the removal of ash is not very efficient because a dense wire efficiently prevents ash particles from being removed with the filtrate. Thereby complicated, energy consuming fiber recovering equipment would be necessary.

To solve the problems, WO patent application 90/06396 suggests the use of a disc-type filter comprising filter discs provided on a horizontal shaft. According to this method pulp is supplied by nozzles so that the jets of the pulp to be treated are directed perpendicular to the filter surface which is different from what is usually done with conventional disc filters. The purpose is to spray the pulp against the filter surface so that the force of the jet pushes the fine fraction and a portion of the liquid supplied with the fiber suspension through the filter surface and the coarser material flows down along the filter surface to discharge means. Further the side of the filter surface facing the finer fraction is flushed with washing jets at the same time ensuring that the coarser fraction does not stick to the filter surface. However, what really happens is not what is expected. Firstly, with a disc-type filter, the suspension is treated differently in different spots of the disc depending on the radius of the disc, i.e. the closer to the shaft of the disc the spot of the disc is the longer it is under the suspension jet. Corresponding-ly, the speed difference between the jet and the disc is manifold at the outer edge of the disc compared to that at the inner edge of the disc. A second drawback is that the portion of the jet hitting the upper edge of the disc sends at once coarse fraction running down the disc which impedes the treatment of the rest of the jet. Further, if high capacity of the device is desired, high supply pressure must be used. However, a straigt relatively high-pressure pulp jet, when hitting the filter surface, causes a very abrupt burst of the filtrate and the fine material running with it through the apertures of the filter surface to the filtrate side of the filter. At the same time a large portion of the filter surface apertures becomes clogged when the fiber material is pressed in the apertures even so thight that it cannot be detached from the filter surface without special measures.

WO patent application no. 92/02676 attempts to solve the problems of the apparatus described above. The apparatus of this publication comprises a cylindrical drum having a screen surface and disposed on a vertical shaft; the suspension to be treated is sprayed onto the outer surface of the cylinder and washing liquid is supplied to the inner surface of the cylinder. The publication mentions that the feeding equipment may be located at the inner side whereby the washing equipment should be at the outer side, correspondingly. The surface of the cylinder is divided in the longitudinal direction in several sections by collars which serve to guide the coarse fraction running down along the cylinder surface off from the surface and to let it drop down to discharge means.

The above apparatus is only partly able to eliminate the drawbacks of a disc-type filter. It is a known fact that when the jet having, as illustrated in the figures, a smooth conical wedge-like configuration, hits the screen surface a circular area of the screen surface is covered. Naturally, coarse material begins to flow down from the leading and upper edge of the jet configuration and hampers filtering of the lower parts of the jet. When studying the progress of this kind of a circular jet on the screen surface only a very small portion of the jet hits a virginal screen surface while the rest hits the coarse fraction flowing on the screen surface. Thus, the operation of the apparatus is far from optimal. Further, both the disc-type apparatus mentioned above and this cylindrical apparatus have in our opinion one serious drawback. The time used for actually removing fine particles from the suspension is very short. In fact it is only the time the suspension jet hits the screen surface. After that, part of the liquid in the suspension may flow via the apertures in the screen surface to the filtrate side but may also flow to the opposite direction via the apertures.

Also an apparatus according to WO patent application 91/15629 is known, which may be either a cylinder-type or a disc filter-type apparatus. It is typical of this apparatus that the suspension to be treated is supplied to the screen surfaces by nozzles both beneath and above the liquid surface in the filter vat. The function of the nozzles disposed under the liquid surface is both to feed the pulp to be treated to the screen surface and to break the web formed onto the screen surface. The web which has risen from the filter vat is removed from the screen surface at the descending side of the cylinder whereby the first nozzle disposed above the liquid surface in the vat is located under the web to be removed. Another typical feature of the solution according to this publication is that the filter vat contains coarse fraction of the fiber suspension supplied via the nozzles. In other words, the fine fraction is removed through the screen surface when the jets from the nozzles hit the screen surface.

However, also the apparatus described above has its drawbacks. We have found out in tests we have performed that spraying from above is a more efficient way of removing impurities that spraying under the liquid surface. The reason is naturally the fact that the suspension jet rapidly dies away when it travels through the coarse fraction in the vat. Thus, also the washing result is poor, and the resulting consistency does not rise very high without vacuum. Further, the location of the jets used for washing the wire and possibly also the pulp layer according to the solution of the WO publication is difficult.

### Disclosure of Invention

In order to solve the problems mentioned above a method and apparatus of a new type have been developed the characterizing features of which are defined in the appended patent claims.

### Brief Description of Drawings

The method and the apparatus of the invention have been described in detail below, by way of example, with reference to the accompanying drawing figures, of which
Fig. 1 is a cross section of a preferred embodiment of the apparatus according to the invention;
Fig. 2 is a longitudinal section of an apparatus according to Fig. 1;
Fig. 3 illustrates optional recycled pulp feed directions according to a preferred embodiment of the invention;
Fig. 4 illustrates in detail the doctor disposed in the vat and illustrated in Fig. 2; and
Fig. 5 illustrates a method according to a preferred embodiment of the invention of discharging pulp from the vat.

### Best Modes for Carrying Out the Invention

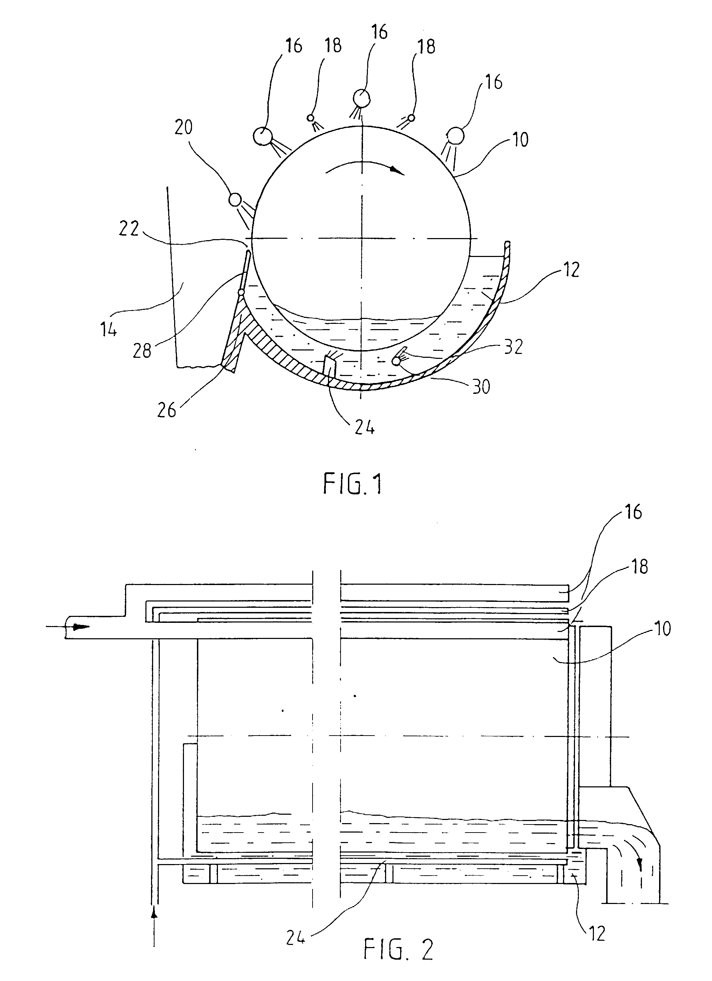

The apparatus according to a preferred embodiment of the invention illustrated in Figs. 1 and 2 comprises mainly a conventional gravity-operated drum filter. The cylinder of the filter is either for example a perforated cylinder or a cylindrical drum 10 having a metal or a plastics wire surface. The cylinder may be self-supporting as such whereby the wire surface, its supporting structures and the ends of the cylinder provide the supporting structure for the cylinder. Thereby a separate shaft is not needed but the cylinder is rotatably mounted on bearings by its ends either on the ends of a vat 12 surrounding at least the lower portion of the cylinder, or on a separate support. If the cylinder is provided with a separate shaft of its own, the bearing assembly is most naturally provided on the shaft. Further, it is possible that no bearing arrangement is provided for the cylinder but it is rotated by means of rollers disposed at least at the ends of the cylinder. If the cylinder is a so-called gravity-operated cylinder, as illustrated in Fig. 1 and 2, it is at its simplest a wire-surfaced cylinder 10 inside which filtrate is collected due to hydrostatic pressure, one or both ends of the cylinder being provided with means for allowing the filtrate to flow out for further treatment. A cylinder of the described type may be either open at both ends or closed at one end while the other end is open. The open end has been sealed for example with appropriate glide sealings with regard to the vat so as to prevent the suspension to be treated from running inside the cylinder. The counterpiece in the vat has been provided with a flow path for discharging the filtate for further treatment. A discharge chute 14 for treated pulp has been provided by the side of the vat 12.

If the apparatus is to serve as a so-called vacuum drum filter there are so-called filtrate compartments provided under its wire surface. The compartments are connected via filtrate ducts either to the hollow shaft of the cylinder or to a filtrate valve located at the end of the cylinder as disclosed for example in U.S. patent no. 4,292,123. Vacuum generated by means of a drop leg, vacuum pump, centrifugal pump, etc., is connected via the filtrate valve to the compartments for efficient removal of filtrate from the suspension to be treated.

A characteristic feature of the apparatus according to the invention and according to Figs. 1 and 2 is that the recycled pulp to be treated is supplied directly onto the surface of the cylinder 10 by means of at least one supply duct 16 extending along the whole length of the cylinder, while in a conventional drum filter the pulp to be treated is supplied to a vat surrounding the drum. The supply duct or ducts 16 is/are preferably disposed by the side of the cylinder 10 above the horizontal plane passing through the axis of the cylinder. The supply duct 16 is provided with apertures, slots or special nozzles for feeding the recycled fiber suspension under pressure onto the surface of the cylinder 10. The diameter of the apertures or the width of the slots is preferably of the order of 1 - 40 mm and the distance from each other 2 - 200 mm depending among other things on the number and location of the supply ducts, the supply pressure and the desired result.

Of course the apertures and/or slots can be disposed in straight rows in alignment with the axis and the periphery but they may be disposed interlaced or even at random positions relative to each other. If several supply ducts 16 are employed the angle between them is 5 - 140° at the periphery of the cylinder. The direction of the jet of the recycled pulp to be supplied may be adjusted preferably in a stepless way so as to have an optimal direction of the jet in view of the operation of the apparatus in all running situations and at all locations of the supply duct 16. An advantageous way of directing the jets is to provide supply ducts 16 which are turnable about their axis. Naturally there are also other ways of directing the jets but they are more difficult to carry out and thus more expensive.

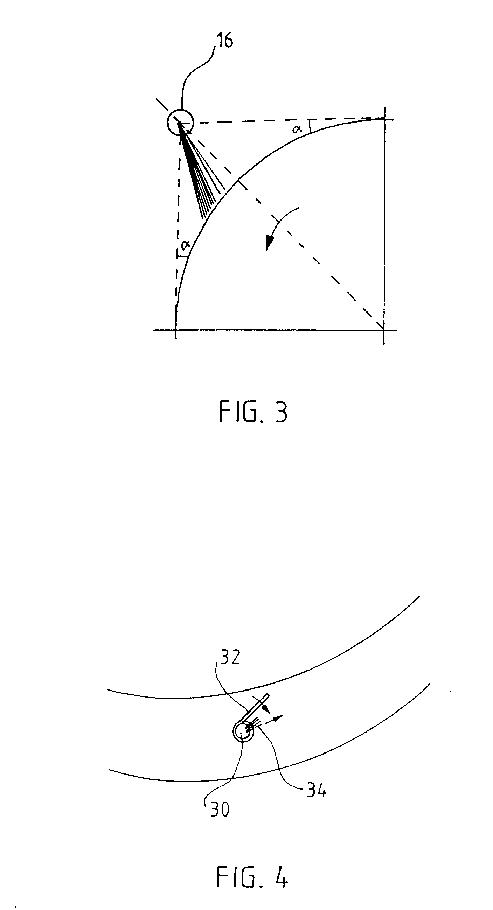

The apparatus works the following way. While the cylinder revolves at a speed of 0.5 - 30 rpm, preferably approx. 10 rpm, recycled pulp is sprayed from supply ducts 16 at a pressure of 0.5 - 8 bar, preferably approx. 2 bar, and at the consistency of approx. 0.1 - 5 %, preferably approx. 0.8 - 1.2 %, onto the surface of the cylinder. The supply direction is different from perpendicular to the surface of the cylinder because if suspension is supplied at a pressure perpendicular to the screen surface there is the danger of the apertures being clogged by the fibers so tight that the fibers cannot be detached by conventional methods, and the yield of good fibers is reduced and thus the operation of the apparatus is uneconomical. Generally, the supply direction forms with the tangent of the cylinder an angle of 0 - 80° (Fig. 3). The supply direction of the recycled fiber suspension relative to the surface of the cylinder is chosen according to the situation; whether there are several supply ducts or only one, which one of the ducts is in question, and for what purpose the jet is used.

If only one supply duct 16 is employed it is natural to dispose it by the portion of the cylinder 10 rising up from the vat 12 and to direct it in the revolving direction of the cylinder 10, preferably at an angle of approx. 60 - 70° relative to the surface of the cylinder. The jet from one supply duct 16 aims, firstly, at forcing a part of the ash-containing liquid through the screen surface due to the sheer supply pressure. At this stage a thickened pulp layer is formed onto the screen surface and ash-containing liquid may be further removed from the layer by arranging a vacuum on the opposite side of the screen surface. If no vacuum is provided the filtering process takes place by gravity, only.

If several supply ducts are employed they are disposed at intervals of 5 - 140° measured from the periphery above the cylinder 10. The first supply duct 16 is used to form a pulp layer the way described above but the following supply ducts 16, or rather the jets of recycled pulp suspension sprayed from the ducts, are used for both supplying new suspension onto the screen surface and to break the pulp layer thickened from the suspension supplied by the previous duct/ducts 16, which pulp layer efficiently prevents ash particles from passing through the screen surface to the other side. At the same time the consistency of the pulp decreases, in other words the jets are used also for diluting the pulp. Preferably the jet is disposed at an angle of approx. 70° against the rotating direction of the cylinder. In a way the new dose of suspension is used to wash the thickened pulp layer as it is used for breaking the pulp layer formed onto the screen surface and the layer is mixed with the new suspension. The last supply duct in the rotating direction of the cylinder is preferably directed to detach the thickened pulp layer from the surface of the screen; i.e. the jet is directed in the rotating direction of the cylinder, preferably almost tangentially relative to the surface of the cylinder whereby the detaching effect of the jets on the thickened pulp layer is strongest.

The apparatus may further comprise washing/diluting ducts 18 disposed the same way as the supply ducts via which the treatment liquid is supplied to the pulp layer thickened onto the wire surface of the cylinder 10. The washing ducts 18 may be used in connection with a cylinder 10 having one or several supply ducts 16. The number of washing ducts 18 need not be the same as the number of supply ducts 16. According to a preferred embodiment, washing ducts 18 are, however, disposed at a distance after each supply duct 16 so that the washing water sprayed from them at a pressure of 1 - 10 bar, preferebly 2 - 4 bar, is used both for displacing the ash-containing liquid still remaining in the suspension, for diluting the suspension, and for breaking the pulp layer thickened onto the screen surface after the supply duct 16, which layer severaly slows down and in practise very rapidly prevents the removal of ash; thereby the removal of ash-containing liquid may be intensified further. If desired the direction of the washing jet may be adjusted the same way as the direction of the supply ducts. In certain cases, mostly depending on the pressure of the washing jet, it is not worthwhile to direct the washing jets perpendicular to the screen surface as the jet may press fibers in front of it too tightly to the apertures of the screen surface.

The apparatus may further comprise a feed duct 20 for a separate wire washing jet disposed between the detaching point 22 of the thickened pulp layer and the first pulp supply duct 16. The washing jet is used for washing the fibers attached to the screen surface off from the surface. The wire washing jet is preferably directed against the rotating direction or the cylinder so that the fiber material detaching from the screen surface drops down to the vat 12 or to the discharge chute 14 for the treated pulp.

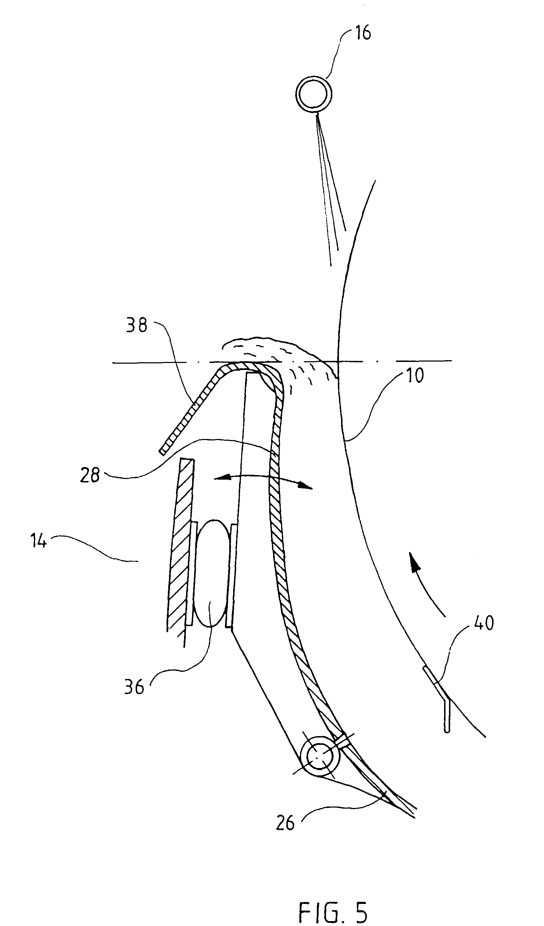

During the treatment, the pulp layer thickened onto the surface of the cylinder 10 preferably reaches a consistency of about 4 % whereby the pulp layer to a large extent drops down to the vat 12 due to gravity when the cylinder has turned enough. Both in order to detach the remaining fiber layer from the screen surface and in order to mix the suspension in the vat, at least one bottom doctor and/or washing jet 24 has been provided in the vat, if desired. The doctor may be a stationary device secured in the bottom of the vat or it may be for example a duct 30 extending in the longitudinal direction of the cylinder (Fig. 4) provided with e.g. a plate-like doctor 32 secured thereto and extending to the vicinity of the cylinder surface, approx. to a distance of min. 5 - 10 mm, and directed against the revolving direction of the cylinder the task of which is to detach in the vat the pulp layer thickened onto the surface of the cylinder. Under the doctor 32, the duct 30 may be provided with nozzles, apertures and/or slots 34 for dilution liquid for breaking the detached pulp layers and washing off the fine impurities therefrom. The duct 30 may be provided with a washing jet for the screen surface itself whereby it can be ensured, if necessary, that the surface of the cylinder is kept clean. Naturally, the direction of the duct 30 or corresponding means, and of the doctor plate disposed in connection therewith may be adjustable, if desired, during operation or at least during a shut-down of the device. The doctors or corresponding means are thus used both for detaching the thickened pulp layer from the surface of the cylinder and for diluting the pulp in the vat 12 to a consistency of approx. 2 % whereby the ash-containing liquid still in the suspension is filtered inside the cylinder 10 due to hydrostatic pressure. There may be one or several doctors provided, they are preferably disposed below the horizontal plane passing through the axis of the cylinder, and they may be composed of one piece extending along the whole length of the cylinder or composed of several shorter portions. The distance of the doctors from the cylinder is preferably approx. 5 - 15 mm.

The discharge of the treated pulp from the vat 12 is performed at the rising side of the cylinder over a side wall 26 to the discharge chute 14. The upper portion of the side wall 26 is preferably provided with a lip 28 turnable to the surface of the cylinder 10. In order to achieve the desired final consistency, it is still possible to press with the lip some liquid through the screen surface from the pulp layer formed in the vat 12 onto the surface of the cylinder and flowing out over the lip 28. Fig. 5 illustrates a preferred embodiment of the lip 28 according to which the lip 28 is turned by means of on actuator 36 which may be a hydraulic, pneumatic, electric etc. device. The lip 28 has been provided with a baffle 38 which irrespective of the position of the lip extends far enough to be able to guide the discharged pulp to the discharge chute 14.

Like conventional gravity drum filters, the apparatus may comprise at least one batten strip or rib 40 (Fig. 5) secured to the screen surface the function of which is to move the pulp thickened in the vicinity of the screen surface towards the discharge chute 14 and to create pressure to boost the dewatering in order to achieve the desired final consistency.

### Industrial Applicability

As can be seen from the above, a new washer for recycled pulp has been developed which is remarkably more efficient than prior art methods and apparatus. When considering the above description it must be recognized that the numeric indications and other more detailed information is to be considered as guiding and directive, only. Such a large number of various factors influence the operation of the apparatus that it is impossible to give in a patent application an applicable concept for each apparatus in which the invention is employed. As examples of these factor the following may be worth mentioning: supply consistency, discharge consistency, temperature, ash content, fiber type, grinding degree, supply pressure of washing liquid and suspension, size of screen surface apertures, vacuum if utilized, revolving speed of the cylinder, etc.

Further, it should be noted that although a large number of new features and details improving the operation of the apparatus have been described above all the details illustrated in the figures need not be employed in all the apparatus according to the invention but the details meeting best the requirements of the particular apparatus in question should be selected. Thus the above description in no way intends to limit the invention from what is defined in the appended patent claims. Thus, for example, although supply ducts or washing ducts are described above it is clear that the supply device may be any apparatus by means of which the suspension to be treated may be supplied under pressure to the screen surface.

## Claims

1. A method of treating recycled pulp by washing therefrom impurities such as ash, ink, stickies, etc., in an apparatus comprising a vat (12) having a liquid surface, a rotatably disposed filter surface, perferably in the form of perforated cylinder (10), located in said vat (12) and having a rising side, means for supplying the pulp to be treated in said apparatus, discharge means for filtrate and discharge means (14) for the treated pulp, according to which method
a) recycled pulp is sprayed onto a filter surface;
b) said impurities are removed from the recycled pulp in a filtrate through said filter surface;
c) a thickened pulp layer is allowed to form onto said filter surface;
d) the thickened pulp layer is broken;
e) a new pulp layer is allowed to form by removing filtrate and impurities through the filter surface; and
f) the treated recycled pulp is removed from the apparatus, **characterized** in the combination that
- in stage a) the recycled pulp is supplied above the liquid level, only;
- in stage d) the pulp layer is broken by means of washing liquid sprayed onto the pulp layer;
- prior to stage f) the pulp layer is allowed to be immersed in the liquid in the vat; and
- in stage f) the thickened pulp layer is discharged at the rising side of the cylinder.

2. A method as claimed in claim 1, **characterized** in that stages a), b) and c) are repeated several times prior to stage f).

3. A method as claimed in claim 1, **characterized** in that stages a), b), c), d) and e) are repeated several times prior to stage f).

4. A method as claimed in claim 1, **characterized** in that stages d) and e) are repeated several times prior to stage f).

5. A method as claimed in claim 1, **characterized** in that stages d) and e) are performed in a way which causes stage e) to take place due to hydrostatic pressure.

6. A method as claimed in claim 1, **characterized** in that stage f) is performed while the pulp layer to be removed is pressed against the filter surface.

7. A method as claimed in claim 1, **characterized** in that stage a) is performed under pressure.

8. A method as claimed in claim 1, **characterized** in that stage b) is performed by means of gravity.

9. A method as claimed in claim 1, **characterized** in that stage b) is performed by means of reduced pressure.

10. A method as claimed in claim 1, **characterized** in that stage d) is performed under pressure.

11. A method as claimed in claim 7, **characterized** in that the supply pressure used is 0.5 - 8 bar, preferably 2 bar.

12. A method as claimed in claim 10, **characterized** in that the supply pressure used is 1 - 10 bar, preferably 2 - 4 bar.

13. A method as claimed in claim 1, **characterized** in that the consistency of the recycled pulp to be supplied is 0.1 - 5 %, preferably 0.8 - 1.2 %.

14. An apparatus for treating recycled pulp for removing impurities such as ash, ink, stickies, etc. therefrom, the apparatus comprising a vat (12) a rotatably disposed perforated cylinder (10), means for supplying the pulp to be treated, discharge means for filtrate, and discharge means (14) for the treated pulp, **characterized** in that the supply means (16) for the pulp to be treated are located above the horizontal plane passing through the axis of the cylinder (10) and that the apparatus further comprises at least one supply means (18) for spraying washing liquid onto the pulp disposed above said horizontal plane passing through the axis of the cylinder (10).

15. An apparatus as claimed in claim 14, **characterized** in that the supply means (16, 18) is provided with apertures, slots and/or nozzles for spraying the material to be treated/the washing liquid in jets onto the cylinder (10), and that the direction of the jets is adjustabe in relation to the surface of the cylinder (10).

16. An apparatus as claimed in claim 14, **characterized** in that there are means (24; 30, 32) provided in the vat for detaching the thickened pulp layer from the surface of the cylinder.

17. An apparatus as claimed in claim 14, **characterized** by a device (28) for pressing the thickened pulp layer against the surface of the cylinder (10).

## Patentansprüche

1. Verfahren zur Behandlung von Sekundärfaserstoff, indem daraus Verunreinigungen wie Asche, Druckfarbe, Klebstoffe usw. in einer Vorrichtung herausgewaschen werden, die einen Behälter (12) mit einer Flüssigkeitsoberfläche umfaßt, eine drehbar angeordnete Filterfläche vorzugsweise in Form eines perforierten Zylinders (10), die in dem Behälter (12) angeordnet ist und eine aufsteigende Seite hat, Mittel zur Aufgabe des zu behandelnden Faserstoffs in die Vorrichtung, Austragsmittel für Filtrat und Austragsmittel (14) für den behandelten Faserstoff, nach welchem Ve rfahren
a) Sekundärfaserstoff auf eine Filterfläche gesprüht wird;
b) besagte Verunreinigungen aus dem Sekundärfaserstoff durch die Filterfläche in ein Filtrat entfernt werden;
c) eine eingedickte Faserstoffschicht sich auf der Filterfläche bilden kann;
d) die eingedickte Faserstoffschicht aufgelöst wird;
e) eine neue Faserstoffschicht sich dadurch bilden kann, daß Filtrat und Verunreinigungen durch die Filterfläche entfernt werden; und
f) der behandelte Sekundärfaserstoff aus der Vorrichtung entfernt wird, **gekennzeichnet** durch folgende Kombination
- in Schritt a) der Sekundärfaserstoff nur oberhalb des Flüssigkeitsniveaus aufgegeben wird;
- in Schritt d) die Faserstoffschicht mittels Waschflüssigkeit aufgelöst wird, die auf die Faserstoffschicht gesprüht wird;
- vor Schritt f) die Faserstoffschicht in die Flüssigkeit im Behälter eintauchen kann; und
- in Schritt f) die eingedickte Faserstoffschicht auf der aufsteigenden Seite des Zylinders abgeleitet wird.

2. Verfahren nach Anspruch 1, dadurch **gekennzeichnet**, daß die Schritte a), b) und c) mehrere Male vor Schritt f) wiederholt werden.

3. Verfahren nach Anspruch 1, dadurch **gekennzeichnet**, daß die Schritte a), b), c), d) und e) mehrere Male vor Schritt f) wiederholt werden.

4. Verfahren nach Anspruch 1, dadurch **gekennzeichnet**, daß die Schritte d) und e) mehrere Male vor Schritt f) wiederholt werden.

5. Verfahren nach Anspruch 1, dadurch **gekennzeichnet**, daß die Schritte d) und e) auf eine Weise durchgeführt werden, wodurch veranlaßt wird, daß Schritt e) durch hydrostatischen Druck stattfindet.

6. Verfahren nach Anspruch 1, dadurch **gekennzeichnet,** daß Schritt f) durchgeführt wird, während die zu entfernende Faserstoffschicht gegen die Filterfläche gedrückt wird.

7. Verfahren nach Anspruch 1, dadurch **gekennzeichnet**, daß Schritt a) unter Druck durchgeführt wird.

8. Verfahren nach Anspruch 1, dadurch **gekennzeichnet**, daß Schritt b) mittels Schwerkraft durchgeführt wird.

9. Verfahren nach Anspruch 1, dadurch **gekennzeichnet,** daß Schritt b) mit reduziertem Druck durchgeführt wird.

10. Verfahren nach Anspruch 1, dadurch **gekennzeichnet,** daß Schritt d) unter Druck durchgeführt wird.

11. Verfahren nach Anspruch 7, dadurch **gekennzeichnet,** daß der benutzte Zuführungsdruck 0,5-8 bar, vorzugsweise 2 bar, ist.

12. Verfahren nach Anspruch 10, dadurch **gekennzeichnet,** daß der benutzte Zuführungsdruck 1-10 bar, vorzugsweise 2-4 bar, ist.

13. Verfahren nach Anspruch 1, dadurch **gekennzeichnet**, daß die Konsistenz des zuzuführenden Sekundärfaserstoffes 0,1-5 %, vorzu gsweise 0,8-1,2 %, ist.

14. Vorrichtung zur Behandlung von Sekundärfaserstoff fürs Entfernen von Verunreinigungen wie Asche, Druckfarbe, Klebstoffe usw. daraus, welche Vorrichtung einen Behälter (12), einen drehbar angeordneten perforierten Zylinder (10), Mittel zur Zuführung des zu behandelnden Faserstoffs, Austragsmittel für Filtrat und Austragsmittel (14) für den behandelten Faserstoff umfaßt, dadurch **gekennzeichnet,** daß die Zuführungsmittel (16) für den zu behandelnden Faserstoff oberhalb der waagerechten, die Achse des Zylinders (10) schneidenden Ebene angeordnet sind, und daß die Vorrichtung des weiteren zumindest ein über der die Achse des Zylinders (10) schneidenden waagerechten Ebene angeordnetes Zuführungsorgan (18) fürs Sprühen von Waschflüssigkeit auf den Faserstoff umfaßt.

15. Vorrichtung nach Anspruch 14, dadurch **gekennzeichnet**, daß das Zuführungsorgan (16, 18) mit Öffnungen, Schlitzen und/oder Düsen fürs Sprühen des zu behandelnden Materials / der Waschflüssigkeit in Strahlen auf den Zylinder (10) versehen ist und daß die Richtung der Strahlen im Verhältnis zur Oberfläche des Zylinders (10) verstellbar ist.

16. Vorrichtung nach Anspruch 14, dadurch **gekennzeichnet,** daß im Behälter Mittel (24; 30, 32) fürs Entfernen der eingedickten Faserstoffschicht von der Zylinderoberfläche vorgesehen sind.

17. Vorrichtung nach Anspruch 14, **gekennzeichnet** durch eine Vorrichtung (28) fürs Drücken der eingedickten Faserstoffschicht gegen die Oberfläche des Zylinders (10).

## Revendications

1. Procédé de traitement de pâte recyclée par lavage des impuretés de celle-ci, telles que des cendres, de l'encre, des impuretés adhésives etc., dans un dispositif comprenant une cuve (12) présentant une surface de liquide, une surface de filtre disposée à rotation, de préférence sous la forme d'un cylindre perforé (10) situé dans ladite cuve (12) et présentant un côté montant, des moyens pour délivrer la pâte à traiter dans ledit dispositif, des moyens d'évacuation du filtrat et des moyens d'évacuation (14) de la pâte traitée, procédé selon lequel
a) on pulvérise de la pâte recyclée sur une surface de filtre ;
b) on extrait lesdites impuretés de la pâte recyclée dans un filtrat à travers ladite surface de filtre ;
c) on laisse une couche de pâte épaissie se former sur ladite surface de filtre ;
d) on brise la couche de pâte épaissie,
e) on laisse se former une nouvelle couche de pâte par extraction du filtrat et des impuretés à travers la surface de filtre ; et
f) on enlève la pâte recyclée traitée du dispositif, caractérisé par la combinaison suivante :
- on délivre la pâte recyclée au cours de l'étape a) au-dessus du niveau de liquide, seulement ;
- au cours de l'étape d), la couche de pâte est brisée au moyen d'un liquide de lavage pulvérisé sur la couche de pâte ;
- avant l'étape f), on laisse la couche de pâte s'immerger dans le liquide dans la cuve ; et
- au cours de l'étape d), la couche de pâte épaissie est évacuée sur le côté montant du cylindre.

2. Procédé selon la revendication 1, caractérisé en ce que les étapes a), b) et c) sont répétées plusieurs fois avant l'étape f).

3. Procédé selon la revendication 1, caractérisé en ce que les étapes a), b), c), d) et e) sont répétées plusieurs fois avant l'étape f).

4. Procédé selon la revendication 1, caractérisé en ce que les étapes d) et e) sont répétées plusieurs fois avant l'étape f).

5. Procédé selon la revendication 1, caractérisé en ce que les étapes d) et e) sont mises en oeuvre d'une manière qui amène l'étape e) à se réaliser par suite de la pression hydrostatique.

6. Procédé selon la revendication 1, caractérisé en ce que l'étape f) est mise en oeuvre lorsque la couche de pâte à extraire est appliquée contre la surface de filtre.

7. Procédé selon la revendication 1, caractérisé en ce que l'étape a) est exécutée sous pression.

8. Procédé selon la revendication 1, caractérisé en ce que l'étape b) est exécutée par gravité.

9. Procédé selon la revendication 1, caractérisé en ce que l'étape b) est exécutée au moyen d'une pression réduite.

10. Procédé selon la revendication 1, caractérisé en ce que l'étape d) est exécutée sous pression.

11. Procédé selon la revendication 7, caractérisé en ce que la pression d'alimentation est de 0,5 à 8 bar, de préférence de 2 bar.

12. Procédé selon la revendication 10, caractérisé en ce que la pression d'alimentation utilisée est de 1 à 10 bar, de préférence de 2 à 4 bar.

13. Procédé selon la revendication 1, caractérisé en ce que la consistance de la pâte recyclée à délivrer est de 0,1% à 5%, de préférence de 0,8% à 1,2%.

14. Dispositif pour traiter de la pâte recyclée, afin d'en extraire des impuretés, telles que des cendres, de l'encre, des impuretés adhésives etc., le dispositif comprenant une cuve (12), un cylindre perforé disposé à rotation (10), des moyens pour délivrer la pâte à traiter, des moyens d'évacuation pour le filtrat et des moyens d'évacuation (14) pour la pâte traitée, caractérisée en ce que les moyens d'alimentation (16) pour la pâte à traiter sont situés au-dessus du plan horizontal passant par l'axe du cylindre (10) et en ce que le dispositif comprend en outre au moins des moyens d'alimentation (18) pour pulvériser du liquide de lavage sur la pâte disposée au-dessus dudit plan horizontal passant par l'axe du cylindre (10).

15. Dispositif selon la revendication 14, caractérisé en ce que les moyens d'alimentation (16, 18) sont pourvus d'ouvertures, de fentes et/ou de buses pour pulvériser la matière à traiter le liquide de lavage en jets sur le cylindre (10), et en ce que la direction des jets est réglable par rapport à la surface du cylindre (10).

16. Dispositif selon la revendication 14, caractérisé en ce qu'il comporte des moyens (24 ; 30, 32) prévus dans la cuve afin de détacher la couche de pâte épaissie de la surface du cylindre.

17. Dispositif selon la revendication 14, caractérisé par un appareil (28), pour appliquer la couche de pâte épaissie contre la surface du cylindre (10).
